# EUROPEAN PATENT APPLICATION

(11) **EP 4 575 948 A1**
(43) Date of publication of application: **25.06.2025**
(21) Application number: 24220309.9
(22) Date of filing: 16.12.2024
(51) Int. Cl.: G06Q 10/0631, G06Q 10/0633

(54) **INFORMATION PROCESSING SYSTEM**

(30) Priority: 22.12.2023 JP 2023217478
(71) Applicant: CBE-A Co., Ltd., Yamagata City Yamagata 990-0022 (JP)
(72) Inventor: Chiba, Ryo, Yamagata City, 990-0022 (JP)
(74) Representative: HKW Intellectual Property PartG mbB

(57) **Abstract**

Provided is an information processing system that enables the immediate retrieval of analytical information useful for business management utilizing a multidimensional database. The information processing system comprises a multidimensional database having at least a project dimension, a process dimension, and a personnel dimension; a planning creation unit that creates a work plan including at least project information, process information, and personnel information contained in each dimension of the database; and a performance management unit that inputs work start time and work completion time for the work plan. The multidimensional database stores hierarchical structure data containing at least the project information, process information, personnel information, work start time, and work completion time.

## Description

### TECHNICAL FIELD

The present invention relates to an information processing system that enables the immediate retrieval of analytical information useful for business management utilizing a multidimensional database.

### BACKGROUND ART

Conventionally, information processing systems have existed for managing work plans and business performance. For example, Patent Document 1 describes an invention of a production planning management system that allows the management side and the production site side to share production performance in real-time, while simplifying the input tasks of production performance on the production site.

### PRIOR TECHNICAL REFERENCES

### Patent Document

Patent Document 1: Japanese Patent No. JP 7148882 B

### SUMMARY OF THE INVENTION

### PROBLEMS TO BE SOLVED BY THE INVENTION

In such work planning management systems, a typical information processing system repeatedly performs the design of "combining one file set of a table structure with another file set of a table structure to create a new file set" in order to maintain the integrity and sequence of the data. This design approach typically utilizes a unidimensional database. As a result, nearly all components necessary for the system have been manually constructed.

However, this design approach becomes inefficient as the scale and complexity of the system increase. To assemble the system, there is a problem needing a large amount of human resources. Additionally, while the data structure may be suitable for business execution, it must be restructured to fit other perspectives (e.g., personnel evaluation or resource management).

Regarding the latter issue, one possible solution is to separately create the program and data structure for a different dimension and use it as input for another business process. However, this solution creates a time lag. In other words, in work planning management, it does not provide the required speed of output for analysis results and the frequency at which the results are updated.

On the other hand, in order to address the above issues, a design approach using a multidimensional database, instead of a unidimensional database, can be considered. In a multidimensional database, data is represented in a "cube" structure, where the cube has multiple dimensions, and each dimension represents a specific category or hierarchy. For example, data with different dimensions such as time, region, and product can be represented in a single integrated view.

This significantly reduces the need for data restructuring or manual construction. Depending on different business needs and analytical perspectives, data can be instantly sliced and diced, enabling rapid data analysis from various perspectives such as work planning, personnel evaluation, and resource management.

However, in a multidimensional database, in order to create the database structure, it is necessary to predefine multidimensional business requirements (such as reports and necessary information formats for human resource management and cost management), design the smallest data unit of the multidimensional database, and structure the data to meet the multidimensional business requirements by adding data to this smallest data unit. This means that the database designer must possess both the ability to define multidimensional business requirements and the ability to construct the system.

However, acquiring both of these abilities is very difficult (since one must be familiar with various business areas and be able to construct systems based on design philosophies that differ from previous ones). Although a design philosophy existed previously, it was not possible to reach the level of design definition.

The inventor of the present invention realized that by creating containers such as "project dimension," "process dimension," and "personnel dimension," and inserting the smallest data unit, i.e., "work start and work end" information into these containers, it is possible to easily construct a multidimensional database that is usable across each dimensions.
(1) Based on the above insight, the information processing system according to the present invention includes a multidimensional database having the project dimension, process dimension, and personnel dimension, a planning creation unit that creates a work plan including project information, process information, and personnel information in the dimensions of each database, and an achievement management unit that inputs work start time and work end time for the work plan. The multidimensional database stores hierarchical data containing the project information, process information, personnel information, work start time, and work end time. This makes it easier to create work plans.
   In this information processing system, work plans based on project dimensions, process dimensions, and personnel dimensions can be easily created using the multidimensional database. And analysis can be performed for each dimension, so that contribute to the efficiency of project management, resource management, and other business operations. This enables more detailed and efficient planning.
(2) Furthermore, in the information processing system described above, the system includes a product dimension, and the planning creation unit creates a work plan containing product information in addition to project information, process information, and personnel information. The multidimensional database stores hierarchical data that includes project information, process information, personnel information, work start time, work end time, and product information.
   In this information processing system, especially the personnel dimension has a hierarchical structure in the order of worker information, work start time, work end time, project information, and process information.That enables individual progress tracking and centralized personnel management.
(3) In the information processing system described above, the project dimension of the multidimensional database has a hierarchical structure in the order of project information, process information, worker information, work start time, and work end time.
(4) In the information processing system described above, the project dimension of the multidimensional database has a hierarchical structure in the order of project information, category information, process information, worker information, work start time, and work end time.
(5) In the information processing system described above, the process dimension of the multidimensional database has a hierarchical structure in the order of category information, process information, project information, worker information, work start time, and work end time.
(6) In the information processing system described above, the product dimension of the multidimensional database has a hierarchical structure in the order of product information, process information, project information, worker information, work start time, and work end time.

### EFFECTS OF THE INVENTION

According to the information processing system of the present invention, work plans and business performance can be efficiently managed using a multidimensional database. Specifically, it can provide a reporting screen that thoroughly eliminates the hassle of reporting, functions to display work reports on a weekly basis per individual, a feature to view the work content of team members for the day, the status visualization of project progress and work hours spent based on work reports, and a display of the "effort level" quantified by the reporter for the project they are working on. It also provides functions such as aggregating standard times, average planned times, and plan-versus-actual performance for tasks by project or product category.

In other words, the present invention provides a new information processing system that uses a multidimensional database to enable the real-time acquisition of business performance, optimize personnel allocation in high performance, improve processes, improve estimates, manage personnel evaluations, and manage the information necessary for business performance improvements, thus enhancing business efficiency.

### BRIEF DESCRIPTION OF THE DRAWINGS

FIG. 1 is a diagram illustrating the configuration of the information processing system according to an embodiment of the present invention.
FIG. 2 is a diagram illustrating the configuration of the server according to an embodiment of the present invention.
FIG. 3 is a functional block diagram of the information processing system according to an embodiment of the present invention.
FIG. 4 is an image diagram of the multidimensional database according to the first embodiment of the present invention.
FIG. 5 is a diagram illustrating the hierarchical structure of the multidimensional database according to the first embodiment of the present invention.
FIG. 6 is a diagram illustrating the integration of information in the multidimensional database according to the first embodiment of the present invention.
FIG. 7 is a "Work Instruction Management" screen displayed on the display unit of the information processing system according to the first embodiment of the present invention.
FIG. 8 is a "Work Instruction Details" screen displayed on the display unit of the information processing system according to the first embodiment of the present invention.
FIG. 9 is a "Work Instruction Details" screen displayed on the display unit of the information processing system according to the first embodiment of the present invention.
FIG. 10 is a "Work Order" screen displayed on the display unit of the information processing system according to the first embodiment of the present invention.
FIG. 11 is a "Work Record" screen displayed on the display unit of the information processing system according to the first embodiment of the present invention.
FIG. 12 is a new "Basic Information and Work Information" screen displayed on the display unit of the information processing system according to the first embodiment of the present invention.
FIG. 13 is a "Business Report Management" screen displayed on the display unit of the information processing system according to the first embodiment of the present invention.
FIG. 14 is a "Business Report Management" screen displayed on the display unit of the information processing system according to the first embodiment of the present invention.
FIG. 15 is an "Activity Overview" screen displayed on the display unit of the information processing system according to an embodiment of the present invention.
FIG. 16 is a diagram illustrating the hierarchical structure of the multidimensional database according to the second embodiment of the present invention.
FIG. 17 is a diagram illustrating the integration of information in the multidimensional database according to the second embodiment of the present invention.
FIG. 18 is a "Work Instruction Management" screen displayed on the display unit of the information processing system according to the second embodiment of the present invention.
FIG. 19 is a "Work Instruction Details" screen displayed on the display unit of the information processing system according to the second embodiment of the present invention.
FIG. 20 is a "Work Order" screen displayed on the display unit of the information processing system according to the second embodiment of the present invention.
FIG. 21 is a "Work Record" screen displayed on the display unit of the information processing system according to the second embodiment of the present invention.
FIG. 22 is a new "Basic Information and Work Information" screen displayed on the display unit of the information processing system according to the second embodiment of the present invention.

### EMBODIMENTS OF THE INVENTION

### <Device Configuration of the Information Processing System>

The information processing system S according to an embodiment of the present invention will be described with reference to the drawings.

The information processing system S is configured to include at least a server 1, an administrator terminal 2, and a worker terminal 3. The server 1, administrator terminal 2, and worker terminal 3 are interconnected via a network N, such as the internet.

The server 1 is a server that manages the operations of the administrator terminal 2 and worker terminal 3 and executes various processes to provide workflow and task management related to business and administrative tasks.

The administrator terminal 2 is an information processing device operated by an administrator for workflow management and composed of the devices such as a PC (Personal Computer), tablet, or smartphone.

The worker terminal 3 is an information processing device operated by workers at business or job sites and composed of the devices such as tablets or smartphones.

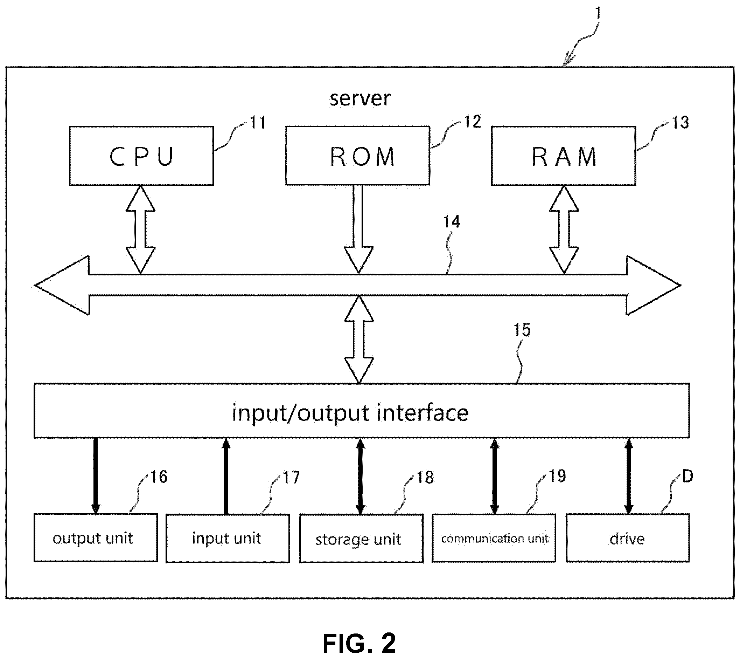

As shown in FIG. 2, the server 1 includes a CPU 11 (Central Processing Unit), ROM 12 (Read-Only Memory), RAM 13 (Random Access Memory), a bus 14, an input/output interface 15, an output unit 16, an input unit 17, a storage unit 18, a communication unit 19, and a drive DD.

The CPU 11 executes various processes according to programs stored in the ROM 12 or programs loaded from the storage unit 18 into the RAM 13. The RAM 13 also stores data necessary for the CPU 11 to execute various processes as needed.

The CPU 11, ROM 12, and RAM 13 are interconnected via a bus 14. The input/output interface 15 is also connected to this bus 14. The output unit 16, input unit 17, storage unit 18, communication unit 19, and drive D are connected to the input/output interface 15.

The output unit 16 consists of devices such as displays or speakers and outputs various information as images or sound. The input unit 17 consists of devices such as keyboards or mice and is used to input various information. The storage unit 18 consists of devices such as hard disks or DRAM 13 (Dynamic Random Access Memory) and stores various data.

The communication unit 19 enables communication with other devices (e.g., the server 1, administrator terminal 2, or worker terminal 3) via a network including the internet. The storage unit 18 is a storage device such as an HDD (Hard Disk Drive) or SSD (Solid State Drive) and stores data-based information. However, the server 1 may also use cloud-based storage of the drive D as the storage unit 18.

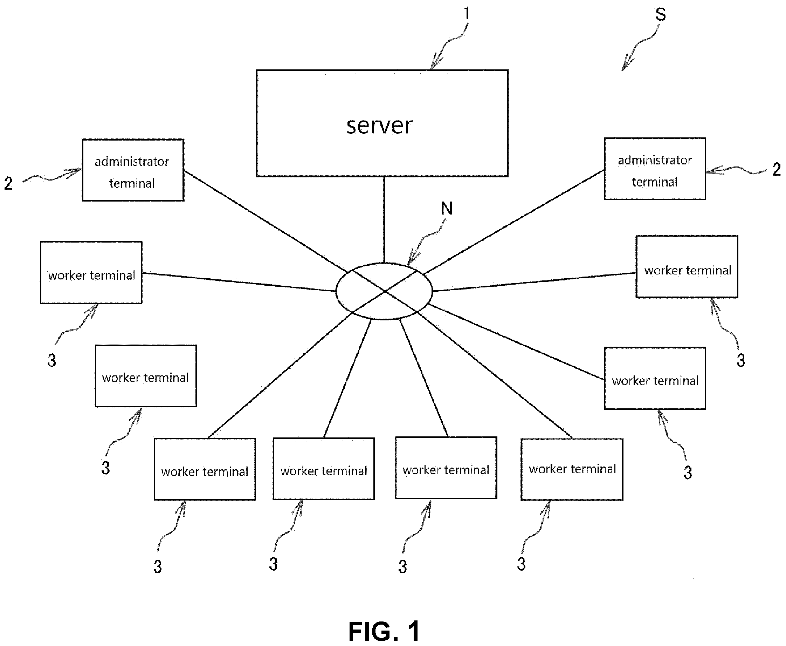

Although not illustrated, the administrator terminal 2 and worker terminal 3 of the information processing system S shown in FIG. 1 may also have the hardware configuration shown in FIG. 2, such as a PC (Personal Computer), smartphone, or tablet. If the administrator terminal 2 or worker terminal 3 is configured as a smartphone or tablet, it may have a touch panel that functions as both the output unit 16 and the input unit 17.

Next is the explanation of the functional blocks for executing business support processes in the information processing system S. This business support processes refer to a series of processes that realize business support, consisting of various sub-processes such as registration processing of pre-registration information , work plan creation processing, and business performance registration processing. This allows for real-time centralized management of information related to various business tasks.

### <Functions of the Information Processing System>

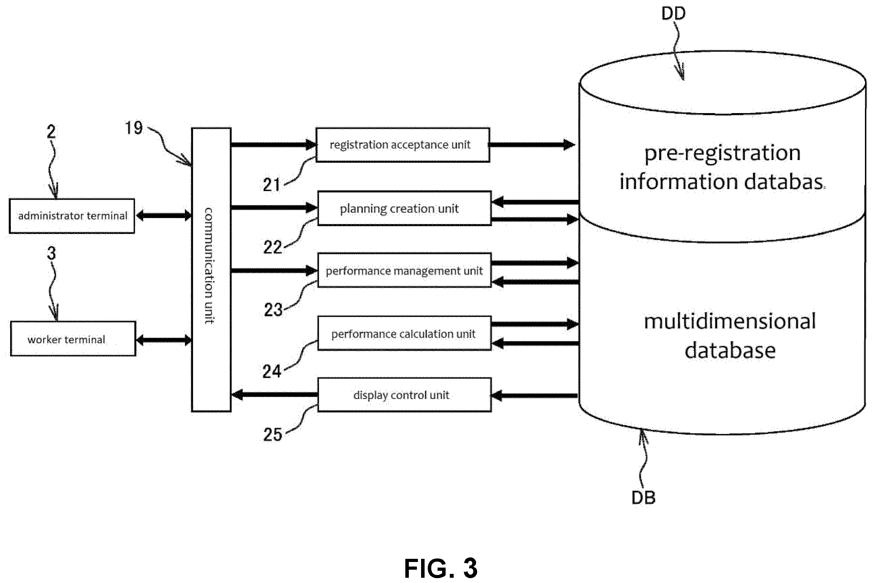

As shown in FIG. 3, the information processing system S builds a business support system including a registration acceptance unit 21, a planning creation unit 22, a performance management unit 23, a performance calculation unit 24, a display control unit 25, a communication unit 19, a pre-registration information database DD, and a multidimensional database DB by coordinating various components of the server 1.

The registration acceptance unit 21 accepts pre-registration information necessary for using the business support system. The accepted pre-registration information is stored and managed in the pre-registration information database DD. Pre-registration information includes, for example, details related to each project such as "instruction number," "client name," "project name," "main person in charge," "quantity," "scheduled completion date," "scheduled delivery date," "project summary," and "acceptance conditions." It also includes details about "processes," "workers (responsible persons)," and "products." However, there are no particular restrictions on what information the pre-registration information must include.

Specifically, the pre-registration information may include the following:
- "Instruction number" as an independent identifier for a project,
- "Client name" as the name of the client (requester) for each project,
- "Project name" as the name of each project,
- "Main person in charge" as the name of the person responsible for each project,
- "Quantity" as information about the deliverables of each project,
- "Scheduled completion date" as the planned completion date for each project,
- "Scheduled delivery date" as the planned delivery date for each project,
- "Project summary" as a summary of each project,
- "Acceptance conditions" as conditions for accepting the project,
- "Product" as the product name related to the business,
- "Process" as the content of the process (task), and
- "Worker" as the name of the person performing the process (task).

The planning creation unit 22 creates work plans consisting of one or more processes required to execute a task. Specifically, the planning creation unit 22 creates work plans tailored to each project by combining one or more processes based on the pre-registration information. The created work plans are stored and managed in the pre-registration information database DD.

### <Multidimensional Database>

Next is the explanation of the operation of the multidimensional database DB. The multidimensional database DB organizes data into multiple "dimensions" for multifaceted analysis, and each dimension stores a hierarchical data having hierarchical structure. In addition, a 3 dimensional database is explained as the 1st embodiment and a 4 dimensional database is explained as the 2nd embodiment in the following way.

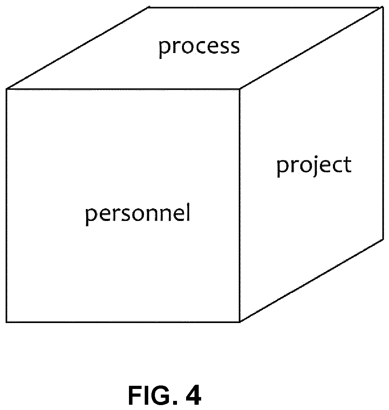

In the 1st embodiment, as shown in FIG. 4, the multidimensional database DB has at least 3 dimensions: a project dimension, a process dimension, and a personnel dimension.

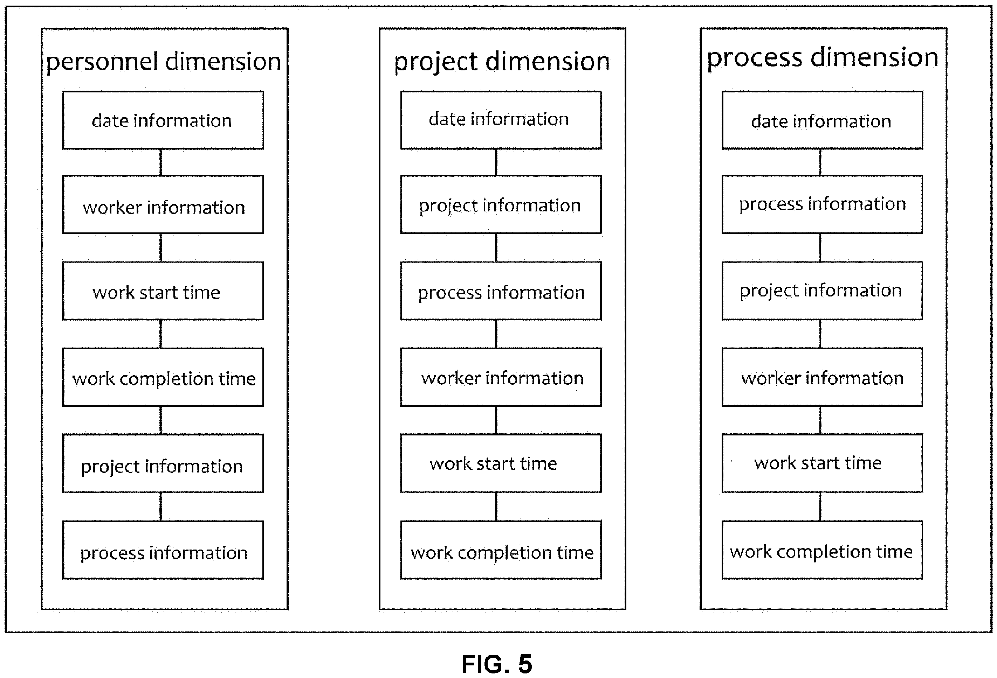

The multidimensional database DB receives minimal data such as date information, worker information, work start time, work completion time, project information, and process information. As shown in FIG. 5, the minimal data input into the multidimensional database DB is sent in parallel to each dimension, organized according to the hierarchical structure of each dimension, and stored as hierarchical data.

The multidimensional database DB in the 1st embodiment, upon receiving minimal data, generates and stores personnel hierarchical structure data in the personnel dimension in the order of date information, worker information, work start time, work completion time, project information, and process information, as shown in FIG. 5. In the project dimension, it generates and stores project hierarchical structure data in the order of date information, project information, process information, worker information, work start time, and work completion time. Similarly, in the process dimension, it generates and stores process hierarchical structure data in the order of date information, process information, project information, worker information, work start time, and work completion time.

By organizing and storing data based on the above hierarchical structures, the multidimensional database DB makes it easy to trace, for example, the projects in which a worker has been involved and the time spent on specific processes within those projects using the personnel dimension. This enables clear analysis of a worker's performance and the time they spent on each project or process.

For instance, the project dimension allows analysis of specific projects, such as which processes were conducted, who participated, and how much time was spent on the tasks. Similarly, the process dimension enables analysis of specific processes, including which projects they were part of, who was involved, and the time taken.

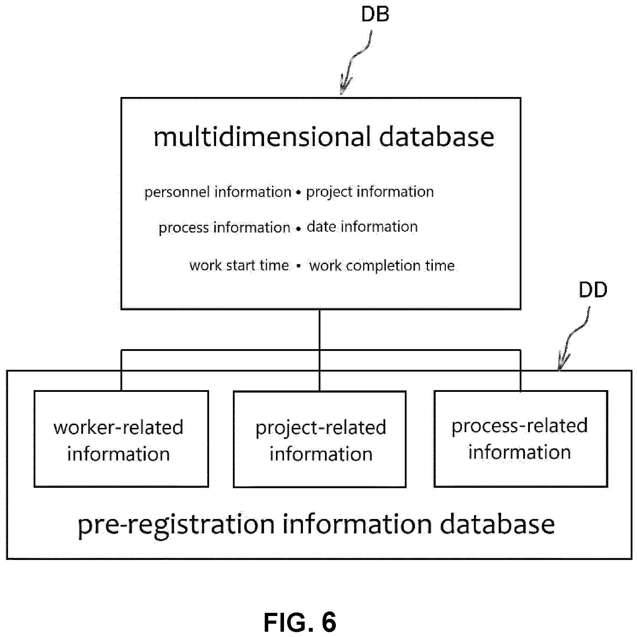

As shown in FIG. 6, the multidimensional database DB in the 1st embodiment collaborates with the pre-registration information database DD to enhance and store information in the hierarchical structure data of each dimension. The hierarchical structure data incorporates additional information from the pre-registration information database DD, including worker-related information, project-related information, and process-related information, in addition to the minimal data such as worker information, personnel information, project information, process information, and date information.

For example, personnel information may include details about "workers", such as name, age, gender, and date of birth. Project information may include instruction number, client name, project name, main person in charge, quantity, scheduled completion date, scheduled delivery date, project summary, and project conditions. Process information may include details about task types and other process-related data.

### <Operation of the Business Management System in the 1st Embodiment>

Next, the operation of the business management system constructed using the information processing system S in the 1st embodiment will be explained with reference to screens displayed on an output device, such as the monitor of the output unit 16 (not shown).

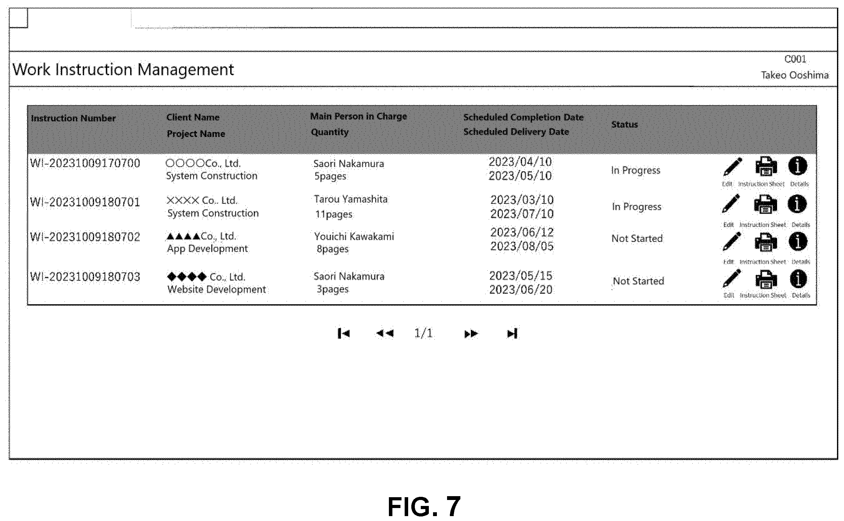

FIG. 7 shows the "Work Instruction Management" screen. This screen allows users to view a list of registered tasks. The "Work Instruction Management" screen includes fields such as "Instruction Number," "Client Name/Project Name," "Main Person in Charge/Quantity," "Scheduled Completion Date/Scheduled Delivery Date," and "Status" for each task. Additionally, buttons such as "Edit," "Instruction Sheet," and "Details" are provided for each task (instruction number/project name).

The information for the "Instruction Number," "Client Name," "Project Name," "Main Person in Charge," "Quantity," "Scheduled Completion Date," and "Scheduled Delivery Date" fields on the "Work Instruction Management" screen can be entered via the "Work Instruction Creation" screen described later.

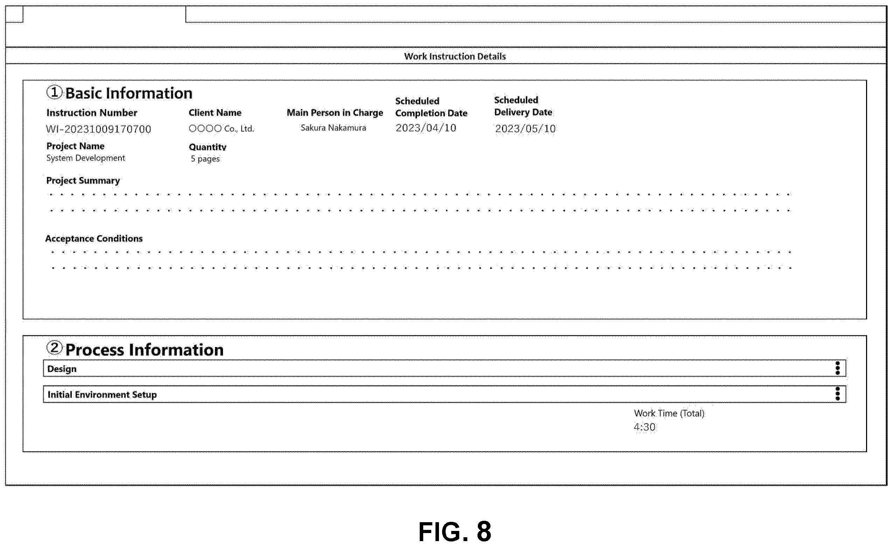

FIG. 8 shows the "Work Instruction Details" screen, which is displayed when the "Details" button on the Work Management screen is clicked. The "Work Instruction Details" screen displays sections for "Basic Information" and "Process Information."

The "Basic Information" section shows details such as "Instruction Number," "Client Name," "Project Name," "Main Person in Charge," "Quantity," "Scheduled Completion Date," and "Scheduled Delivery Date," along with additional fields like "Project Summary" and "Acceptance Conditions," allowing users to check detailed information about each task.

The "Process Information" section displays the task-specific "Work Instruction" field names and the total "Work Time (Total)" required (or spent). In this embodiment, the "Work Instruction" field names include items such as "Design" and "Initial Environment Setup," and a vertical "..." button is provided on the right for additional details. The "Work Time (Total)" is displayed as "04:30," indicating that 4 hours and 30 minutes were required for the task shown on this screen.

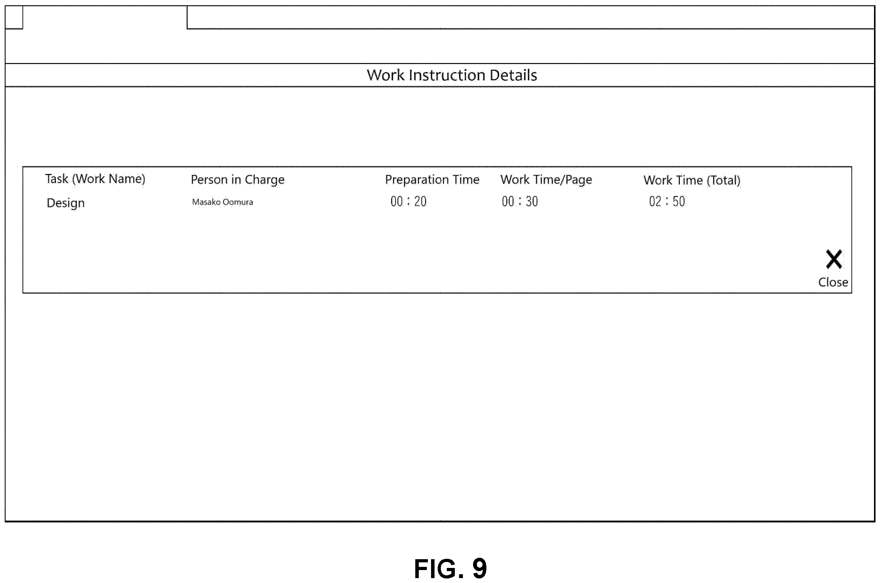

FIG. 9 shows a "Work Instruction Details" screen that appears when the vertical "..." button at the far right of the "Work Instruction" field name is clicked. This "Work Instruction Details" screen displays fields such as "Task (Work Name)," "Person in Charge," "Preparation Time," "Work Time/Page," and "Work Time (Total)" and includes a "Close" button. In this embodiment, the "Work Instruction Details" screen displays information for the task "Design," with detailed information for each field related to the design task.

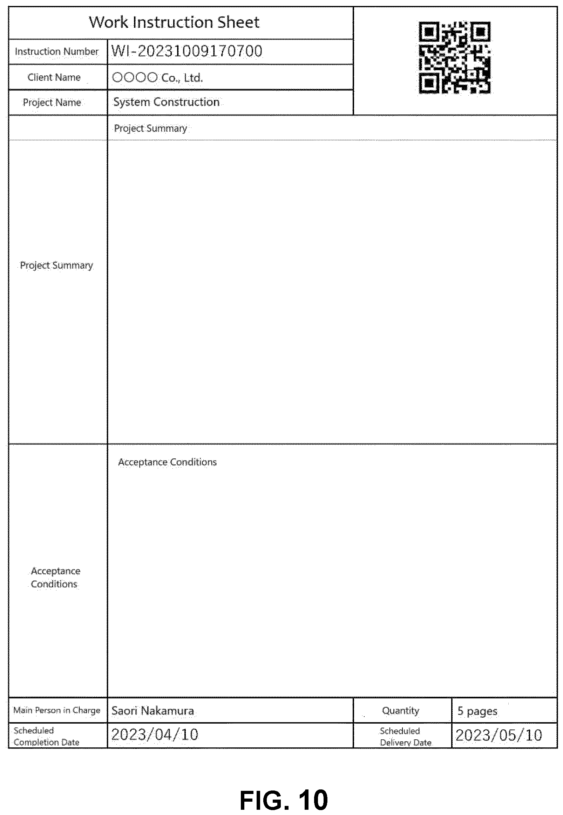

FIG. 10 shows the "Work Instruction Sheet" screen displayed when the "Instruction Sheet" button on the work management screen is clicked. The "Work Instruction Sheet" screen allows users to check the details of work instructions. The screen includes fields such as "Instruction Number," "Client Name," "Project Name," "Project Summary," "Acceptance Conditions," "Main Person in Charge," "Quantity," "Scheduled Completion Date," and "Scheduled Delivery Date," along with a [QR Code (registered trademark)]. The work instruction sheet can be printed using a printer functioning as the output unit 16. Additionally, the [QR Code (registered trademark)] on the screen or the printed work instruction sheet can be scanned using a smartphone or similar device of the worker terminal 3.

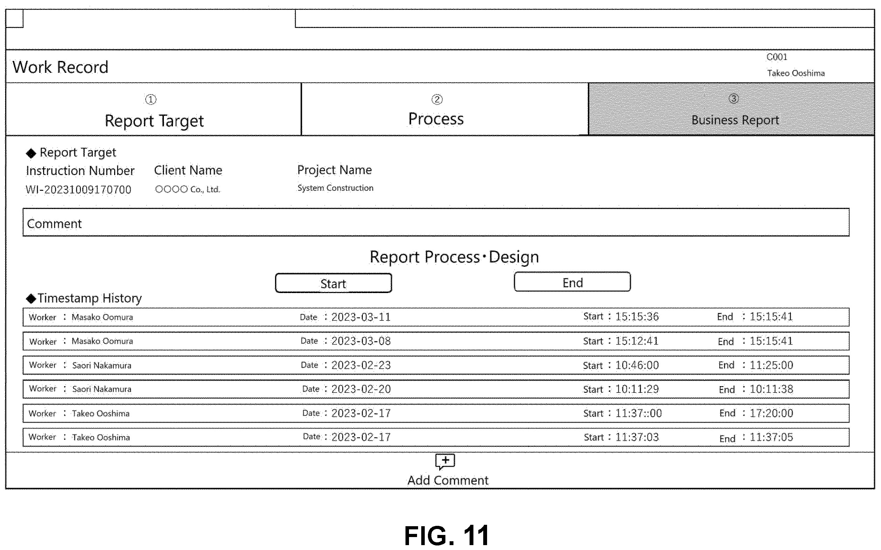

FIG. 11 shows the "Work Record" screen displayed when the [QR Code (registered trademark)] on the "Work Instruction Sheet" screen is scanned. This embodiment illustrates the "Business Report" screen from STEP.3 of the "Work Record." The "Work Record" screen can also be accessed by clicking on the "Work Record" item displayed when hovering over the vertical"..." button in the "Task" field on the "Work Instruction Details" screen. In this case, the screen progresses from STEP.1 of the "Work Record."

When the [QR Code (registered trademark)] is scanned, the information related to STEP.1 (target task) and STEP.2 (process) of the "Work Record" is embedded in the [QR Code (registered trademark)]. As a result, the screen skips the STEP.1 and STEP.2 of the "Work Record" and directly displays the "Business Report" screen of STEP.3.

The "Business Report" screen of the "Work Record" allows users to review past records of each task. In addition to reviewing past records, the screen enables users to log the start and end times of tasks. The screen includes fields such as "◆Report Target," "Report Process," "◆Timestamp History," a "Comments" field, and buttons for "Start" and "End" (of a process), as well as a "[+] Add Comment" button.

The "Report Target" field displays items from the work instruction sheet, including "Instruction Number," "Client Name," and "Project Name." Clicking the "[+] Add Comment" button allows users to enter comments about the process they executed in the "Comments" field. The "◆Timestamp History" field displays information such as the "Worker" who performed the task, the "Date," and the "Start" and "End" times of the task performed within the "Report Process."

Clicking the "Start" button records the "Start" time of the task in the "◆Timestamp History," while clicking the "End" button records the "End" time. The "Worker" field stores the user of the worker terminal 3 that scanned the QR Code, and the "Date" field stores the date the QR Code was scanned. The "Date," "Worker," "Start" time, and "End" time are sent to the multidimensional database DB as date information, worker information, work start time, and work completion time, respectively. At the same time, project information and process information are also sent to the multidimensional database DB.

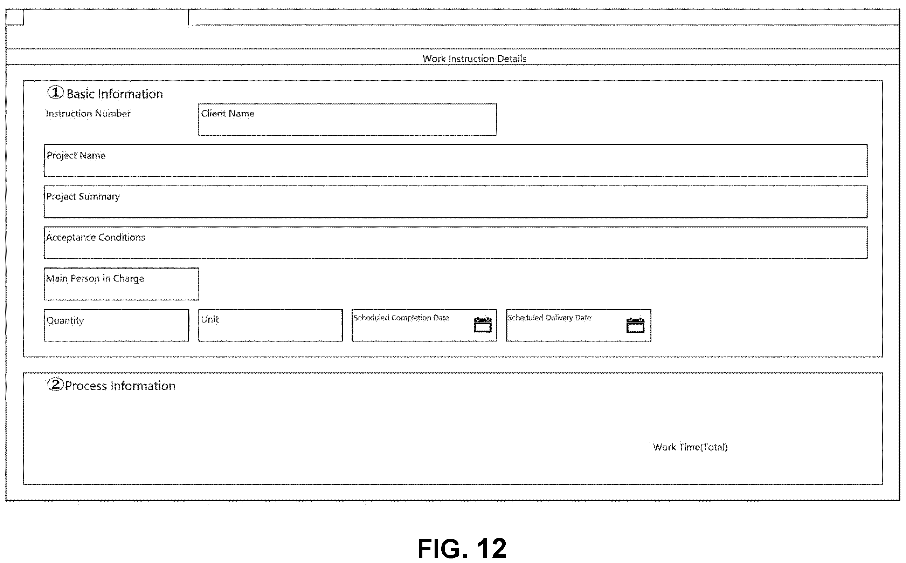

FIG. 12 shows the "Basic Information and Process Information" screen for creating a new work instruction, displayed when the menu button (vertical "≡" button, commonly referred to as a hamburger button) on the work management screen is clicked, and "Create New" is selected. The "Basic Information and Process Information" screen for new work instructions displays fields for "Basic Information" and "Process Information," allowing users to create new work instructions.

The "Basic Information" section displays input fields such as "Instruction Number," "Client Name," "Project Name," "Main Person in Charge," "Quantity," "Scheduled Completion Date," "Scheduled Delivery Date," "Project Summary," and "Acceptance Conditions." Users can enter information into each field via the input unit 17, which is received by the registration acceptance unit 21. The "Process Information" section allows users to select and input process information registered in the master information (not shown).

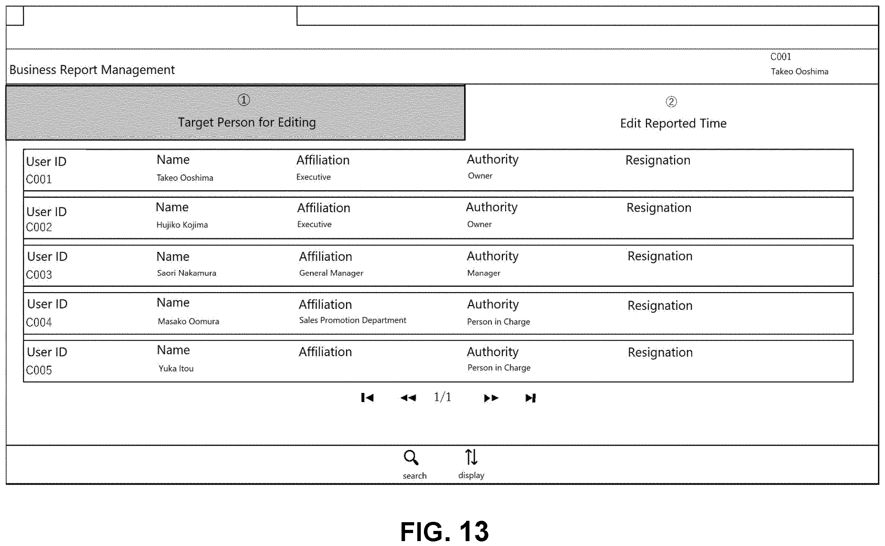

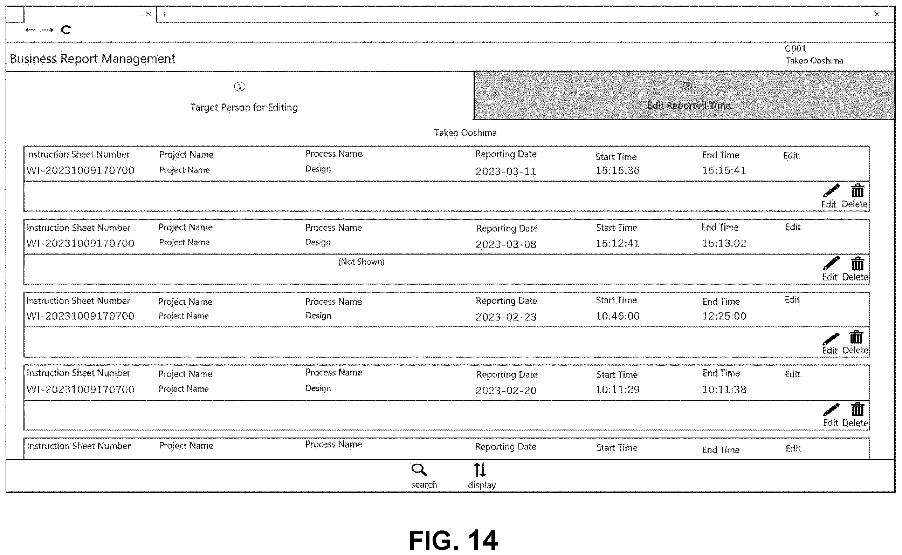

FIGS. 13 and 14 show the "Business Report Management" screen. The "Business Report Management" screen allows users to edit already-registered "tasks." FIG. 13 shows the screen with the "(1) Target Person for Editing" tab open. This screen includes fields for each task editing target, such as "User ID," "Name," "Affiliation," "Authority," and "Resignation." The information for each target is stored in the master information of the database (not shown).

FIG. 14 shows the screen with the "(2) Edit Reported Time" tab open in the "Business Report Management" screen. This screen includes fields such as "Instruction Sheet Number," "Project Name," "Process Name," "Reporting Date," "Start Time," and "End Time" for the editing target (e.g., "Takeshi Oshima" in FIG. 14), along with buttons for "Edit" and "Delete."

Clicking the "Edit" button allows users to modify the "Start Time" or "End Time" for each process. When an edit is made, a checkmark appears in the "Edited" field as a record of the change.

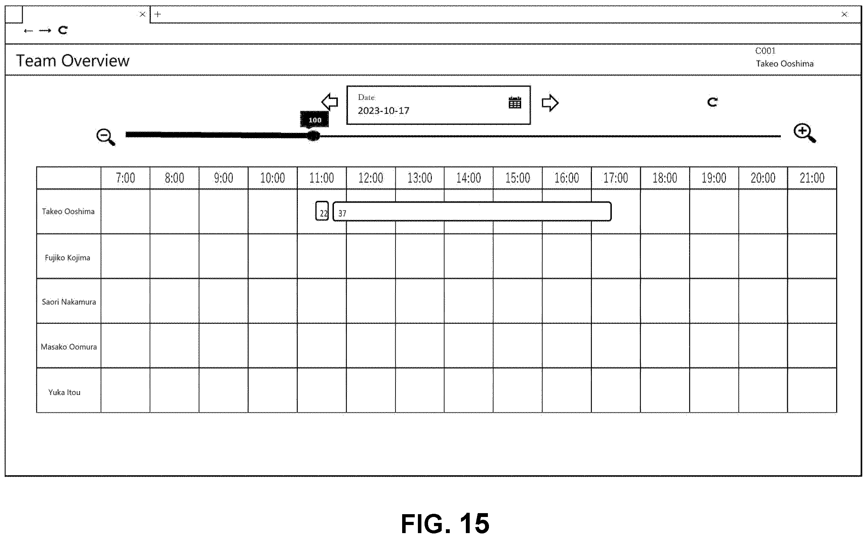

FIG. 15 illustrates the "Team Overview" screen. The "Team Overview" screen displays the daily schedules (past and future) of all workers. Since the multidimensional database DB stores data using hierarchical structure data for each dimension, it enables easy and fast data analysis and processing, allowing for real-time displays such as the "Team Overview."

### <Operation of the Business Management System in the 2nd Embodiment>

In the 2nd embodiment, the multidimensional database DB includes 4 dimensions: project dimension, process dimension, personnel dimension, and product dimension (not shown).

The multidimensional database DB receives minimal data, including date information, worker information, work start time, work completion time, project information, process information, and product information. The minimal data entered into the multidimensional database DB is simultaneously sent to each dimension, organized according to the hierarchical structure of each dimension, and stored as hierarchical data.

In the 2nd embodiment, the personnel dimension stores personnel hierarchical structure data, the project dimension stores project hierarchical structure data, and the process dimension stores process hierarchical structure data.

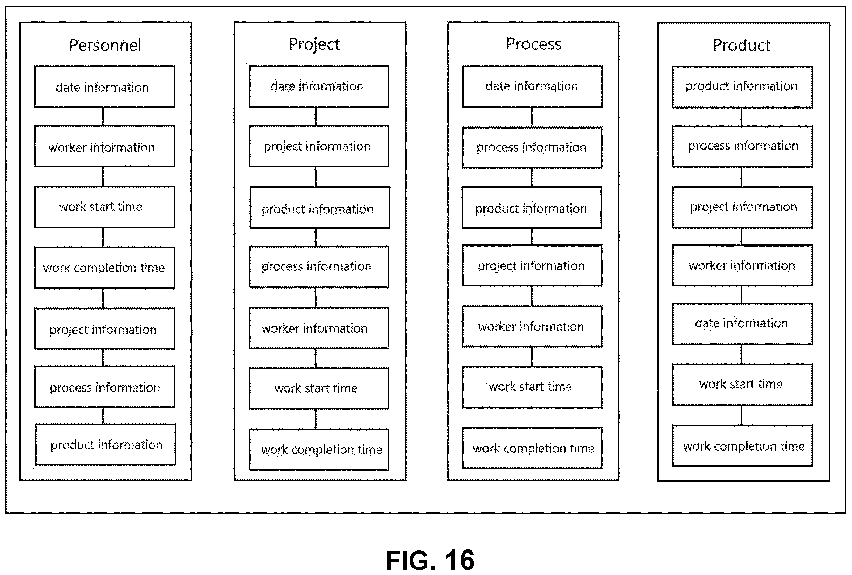

As shown in FIG. 16, the multidimensional database DB in the 2nd embodiment generates and stores personnel hierarchical structure data in the order of date information, worker information, work start time, work completion time, project information, process information, and product information in the personnel dimension. In the project dimension, it generates and stores project hierarchical structure data in the order of date information, project information, product information, process information, worker information, work start time, and work completion time. In the process dimension, it generates and stores process hierarchical structure data in the order of date information, process information, product information, project information, worker information, work start time, and work completion time.

Furthermore, in the product dimension of the multidimensional database DB in the 2nd embodiment, it generates and stores product hierarchical structure data in the order of product information, process information, project information, worker information, date information, work start time, and work completion time.

By organizing and storing data based on the hierarchical structures described above, the multidimensional database DB makes it easy, for example, to trace the projects a worker has been involved in and the time spent on specific processes within those projects using the personnel dimension. This allows for clear analysis of a worker's performance and the time they have spent on each project or process.

Additionally, for instance, the project dimension allows for analysis of specific projects, such as which processes were conducted, who participated, and the time spent on those tasks. Similarly, the process dimension enables analysis of specific processes, such as which projects they were part of, who was involved, and the time required.

Moreover, the product dimension allows for analysis of specific products, such as which processes they underwent, in which projects they were involved, who participated, and the time required for each task.

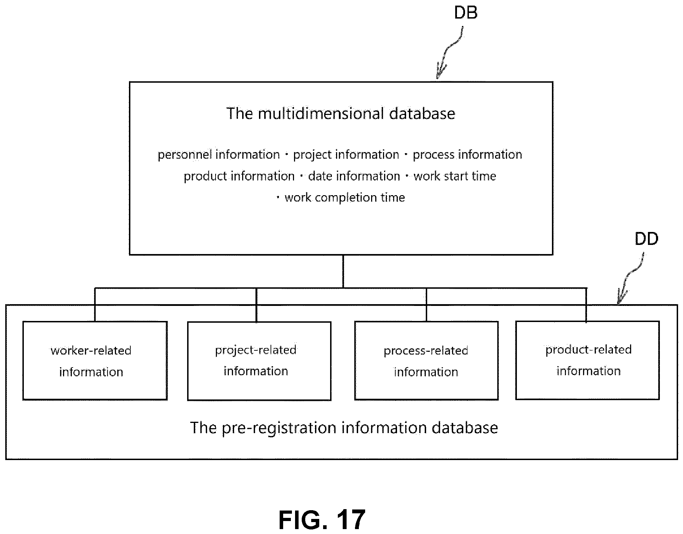

As shown in FIG. 17, the multidimensional database DB in the 2nd embodiment collaborates with the pre-registration information database DD to enhance and store information in the hierarchical structure data of each dimension. Each hierarchical structure data incorporates additional information from the pre-registration information database DD, including worker-related information, project-related information, process-related information, and product-related information, in addition to the minimal data.

For example, personnel information may include worker details such as name, age, gender, and date of birth. Project information may include instruction number, client name, project name, main person in charge, quantity, scheduled completion date, scheduled delivery date, project summary, and project conditions. Process information may include task types and other process-related details. Product-related information may include details about the composition of the product.

Next, the operation of the business management system constructed using the information processing system S in the 2nd embodiment will be explained with reference to screens displayed on an output device, such as the monitor of the output unit 16 (not shown).

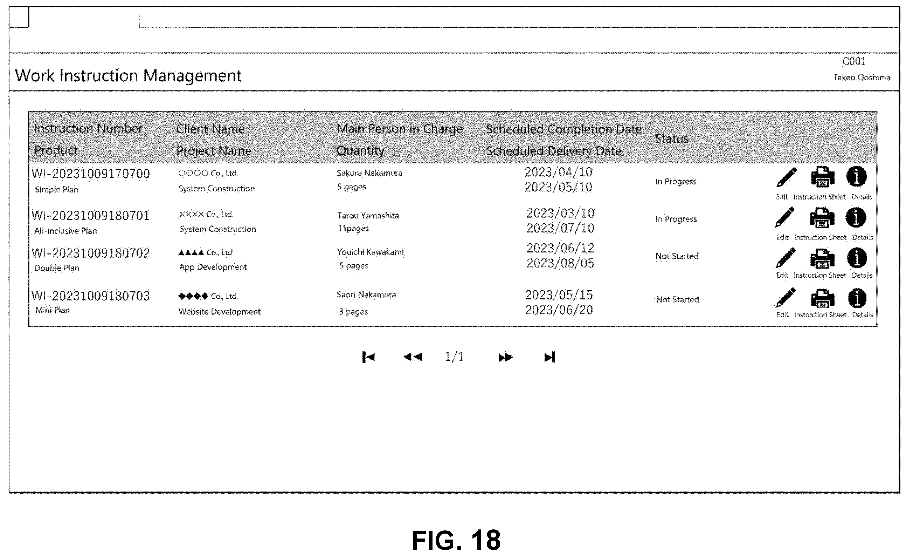

FIG. 18 shows the "Work Instruction Management" screen. The "Work Instruction Management" screen allows users to view a list of registered tasks. The screen includes fields for "Instruction Number/Product," "Client Name/Project Name," "Main Person in Charge/Quantity," "Scheduled Completion Date/Scheduled Delivery Date," and "Status." It also provides buttons for "Edit," "Instruction Sheet," and "Details" for each task.

Information for the "Instruction Number," "Client Name," "Product," "Project Name," "Project Summary," "Acceptance Conditions," "Main Person in Charge," "Quantity," "Scheduled Completion Date," and "Scheduled Delivery Date" fields on the "Work Instruction Management" screen can be entered via the "Work Instruction Creation" screen described later.

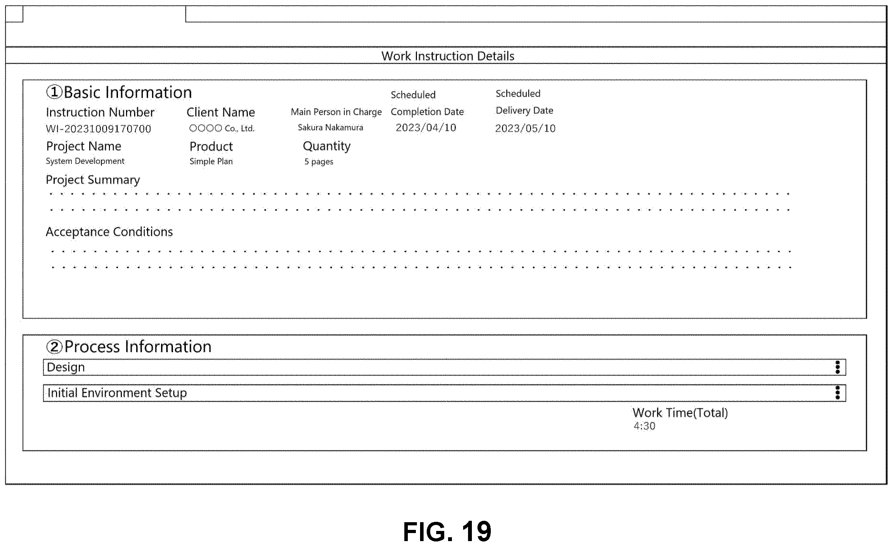

FIG. 19 shows the "Work Instruction Details" screen displayed when the "Details" button on the work management screen is clicked. The "Work Instruction Details" screen displays sections for "Basic Information" and "Process Information."

The "Basic Information" section displays detailed information for each task, including "Instruction Number," "Product," "Client Name," "Project Name," "Main Person in Charge," "Quantity," "Scheduled Completion Date," "Scheduled Delivery Date," "Project Summary," and "Acceptance Conditions."

The "Process Information" section displays the field names of "Work Instructions" specific to each task and the total "Work Time (Total)" required (or spent). In this embodiment, field names such as "Design" and "Initial Environment Setup" are displayed in the "Work Instructions" section, with a vertical"..." button on the right for more details. The "Work Time (Total)" is displayed as "04:30," indicating that 4 hours and 30 minutes were required for the task.

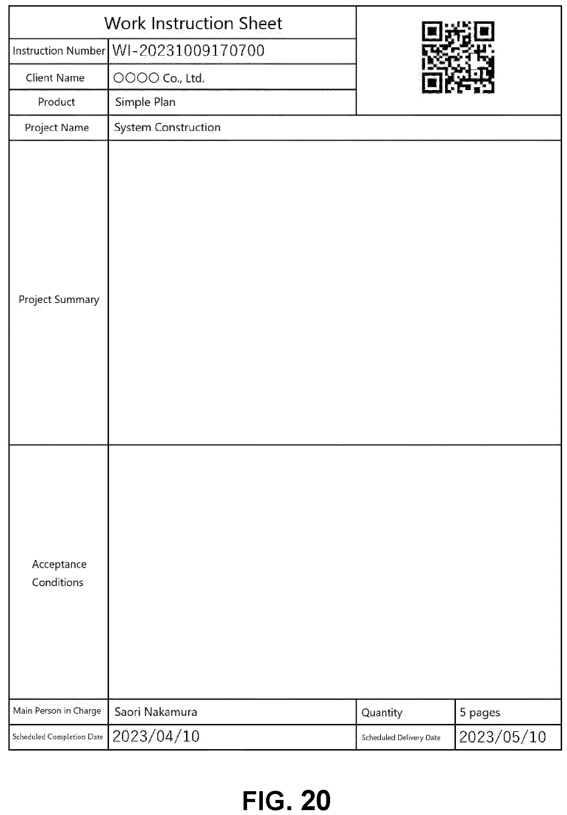

FIG. 20 shows the "Work Instruction Sheet" screen displayed when the "Instruction Sheet" button on the work management screen is clicked. The "Work Instruction Sheet" screen allows users to check the details of work instructions. The screen includes fields such as "Instruction Number," "Client Name," "Product," "Project Name," "Project Summary," "Acceptance Conditions," "Main Person in Charge," "Quantity," "Scheduled Completion Date," and "Scheduled Delivery Date," along with a [QR Code (registered trademark)]. The work instruction sheet can be printed using a printer functioning as the output unit 16. Additionally, the [QR Code (registered trademark)] on the screen or the printed work instruction sheet can be scanned using a smartphone or similar device of the worker terminal 3.

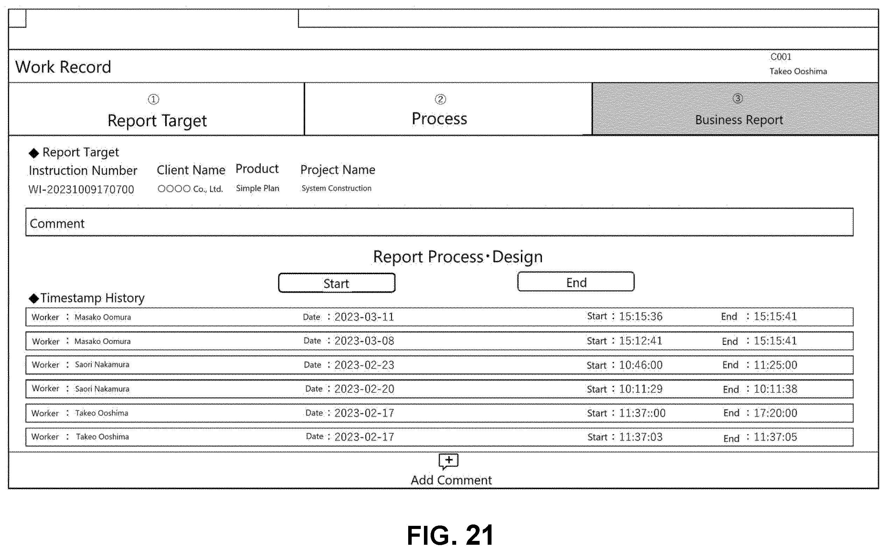

FIG. 21 shows the "Work Record" screen displayed when the [QR Code (registered trademark)] on the "Work Instruction Sheet" screen is scanned. This embodiment illustrates the "Process" screen from STEP.3 of the "Work Record." The "Work Record" screen can also be accessed by clicking on the "Work Record" item displayed when hovering over the vertical "..." button in the "Task" field on the "Work Instruction Details" screen. In this case, the screen progresses from STEP.1 of the "Work Record."

When the [QR Code (registered trademark)] is scanned, information related to STEP.1 (target task) and STEP.2 (process) of the "Work Record" is embedded in the [QR Code (registered trademark)]. As a result, the "Work Record" skips STEP.1 and STEP.2 and directly displays the "Business Report" screen of STEP.3.

The "Business Report" screen of the "Work Record" allows users to review past records of each task and log the start and end times of tasks. The screen includes fields for "◆Report Target," "Report Process," and "◆Timestamp History," along with a "Comments" field, "Start" and "End" buttons for processes, and a "[+] Add Comment" button.

The "Report Target" displays the "Instruction Number," "Client Name," "Product," and "Project Name" fields from the work instruction sheet. Clicking the "[+] Add Comment" button allows users to input comments about the "Report Process" into the "Comments" field. The "◆Timestamp History" section shows the "Worker," "Date," "Start" time, and "End" time for tasks performed within the "Report Process."

Clicking the "Start" button records the "Start" time for the task in the "◆Timestamp History," while clicking the "End" button records the "End" time. The "Worker" field stores the user of the worker terminal 3 who scanned the QR Code, and the "Date" field stores the date the QR Code was scanned. The "Date," "Worker," "Start" time, and "End" time are sent to the multidimensional database DB as date information, worker information, work start time, and work completion time, respectively. Simultaneously, project information and process information are also sent to the multidimensional database DB.

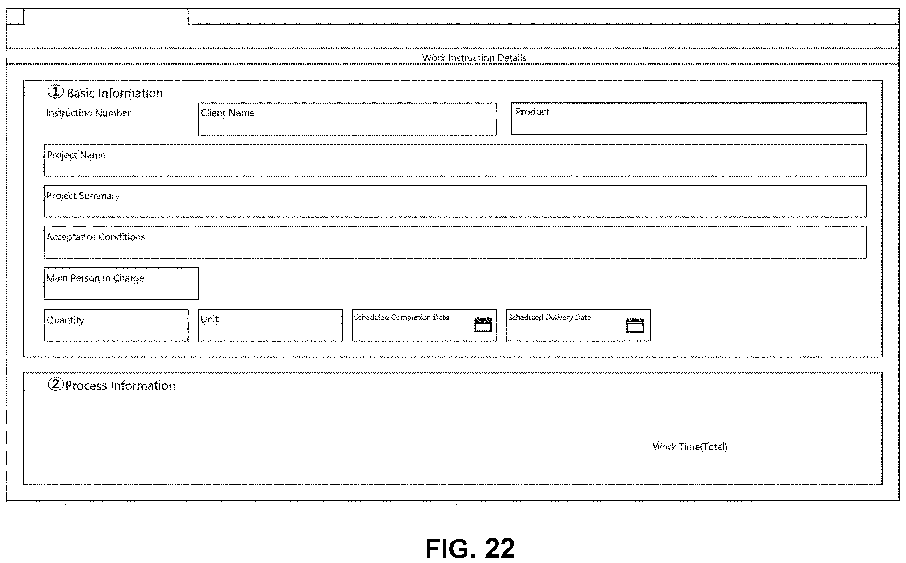

FIG. 22 shows the "Basic Information and Process Information" screen for creating a new work instruction, displayed when the menu button (vertical "=" button, also known as a hamburger button) on the work management screen is clicked, and "Create New" is selected. The "Basic Information and Process Information" screen displays sections for "Basic Information" and "Process Information" and allows users to create new work instructions.

The "Basic Information" section includes input fields such as "Instruction Number," "Product," "Client Name," "Project Name," "Main Person in Charge," "Quantity," "Scheduled Completion Date," "Scheduled Delivery Date," "Project Summary," and "Acceptance Conditions." Users can input data for these fields via the input unit 17, which is processed by the registration acceptance unit 21. The "Process Information" section allows users to select and input process details from master information (not shown).

In the 2nd embodiment, while the 1st embodiment is a 3 dimensional database with personnel dimension, project dimension, and process dimension, the 2nd embodiment adds a product dimension, making it a 4 dimensional database. This allows for analysis from the perspective of the product dimension, expanding the scope of analysis.

This embodiment describes the multidimensional database in the form of a 3 dimensional database with 3 dimensions and a 4 dimensional database with 4 dimensions. However, the multidimensional database may also include a 5 or more dimensional database with 5 or more dimensions.

The information processing system for constructing the business management system according to this embodiment has been described. However, the information processing system is not limited to the above embodiments and may adopt other configurations as long as they achieve the objectives of the invention.

### INDUSTRIAL APPLICABILITY

The present invention can be applied to information processing systems used for business support and related tasks.

### LIST OF REFERENCE SYMBOLS

S - Information Processing System
N - Network
DD - Pre-registration Information Database
DB - Multidimensional Database
1 - Server
2 - Administrator Terminal
3 - Worker Terminal
19 - Communication Unit
21 - Registration Acceptance Unit
22 - Planning Creation Unit
23 - Performance Management Unit
24 - Performance Calculation Unit
25 - Display Control Unit

## Claims

1. An information processing system (S) comprising:
a multidimensional database (DB) having at least a project dimension, a process dimension, and a personnel dimension;
a planning creation unit (22) configured to create a work plan including at least project information, process information, and personnel information contained in each dimension of the database;
a performance management unit (23) for inputting a work start time and a work completion time for the work plan,
wherein the multidimensional database (DB) stores hierarchical data including at least the project information, the process information, the personnel information, the work start time, and the work completion time, making it easier to create work plans.

2. The information processing system (S) according to claim 1,
further comprising a product dimension,
wherein the planning creation unit (22) is configured to create a work plan including product information in addition to the project information, the process information, and the personnel information,
and wherein the multidimensional database (DB) stores hierarchical data including at least the project information, the process information, the personnel information, the work start time, the work completion time, and the product information.

3. The information processing system (S) according to claim 1,
wherein the personnel dimension of the multidimensional database (DB) has a hierarchical structure in the order of the worker information, the work start time, the work completion time, the project information, the category information, and the process information.

4. The information processing system (S) according to claim 1,
wherein the project dimension of the multidimensional database (DB) has a hierarchical structure in the order of the project information, the category information, the process information, the worker information, the work start time, and the work completion time.

5. The information processing system (S) according to claim 1,
wherein the process dimension of the multidimensional database (DB) has a hierarchical structure in the order of the category information, the process information, the project information, the worker information, the work start time, and the work completion time.

6. The information processing system (S) according to claim 2,
wherein the product dimension of the multidimensional database (DB) has a hierarchical structure in the order of the product information, the process information, the project information, the worker information, the work start time, and the work completion time.
